Europäisches Patentamt

European Patent Office

Office européen des brevets

(11) Veröffentlichungsnummer: **0 149 081**
**B1**

(12) **EUROPÄISCHE PATENTSCHRIFT**

(45) Veröffentlichungstag der Patentschrift: 04.07.90

(51) Int. Cl.⁵: **F 16 F 13/00,** B 60 K 5/12

(21) Anmeldenummer: **84114510.5**

(22) Anmeldetag: **29.11.84**

(54) **Elastisches Lager mit einem hydraulischen Dämpfer.**

(30) Priorität: **28.12.83 DE 3347273**

(43) Veröffentlichungstag der Anmeldung:
**24.07.85 Patentblatt 85/30**

(45) Bekanntmachung des Hinweises auf die
Patenterteilung:
**04.07.90 Patentblatt 90/27**

(84) Benannte Vertragsstaaten:
**FR GB IT SE**

(56) Entgegenhaltungen:
EP-A-0 042 908
DE-A-2 454 834
DE-A-2 503 581
DE-A-2 512 727
DE-A-2 652 501
DE-A-2 717 825
DE-A-3 016 421
DE-C-3 225 700
FR-A-2 175 352
FR-A-2 274 833
FR-A-2 500 555
GB-A-2 079 894

(73) Patentinhaber: Lemförder Metallwaren AG
Postfach 1220
D-2844 Lemförde (DE)

(72) Erfinder: Jördens, Ernst-Günter
Geranienweg 29
D-2845 Damme (DE)

## Beschreibung

Die Erfindung betrifft ein elastisches Stützlager mit Gattungsmerkmalen nach dem Oberbegriff des Patentanspruches 1.

Ein solches Stützlager ist in der FR—A—2 500 555 beschrieben bei dieser Anordnung umgibt ein Federelement die Arbeitskammer des hydraulischen Dämpfers in der Weise, daß schon eine geringe Verformung in axialer Richtung den vorhandenen Spielraum aufzehrt, so daß eine nennenswerte Abkopplung der statischen Belastung nicht möglich zu sein scheint. Es fehlt außerdem die Einstellung des hydraulischen Dämpfers zur Anpassung an die durch die statische Belastung eintretende Einfederung.

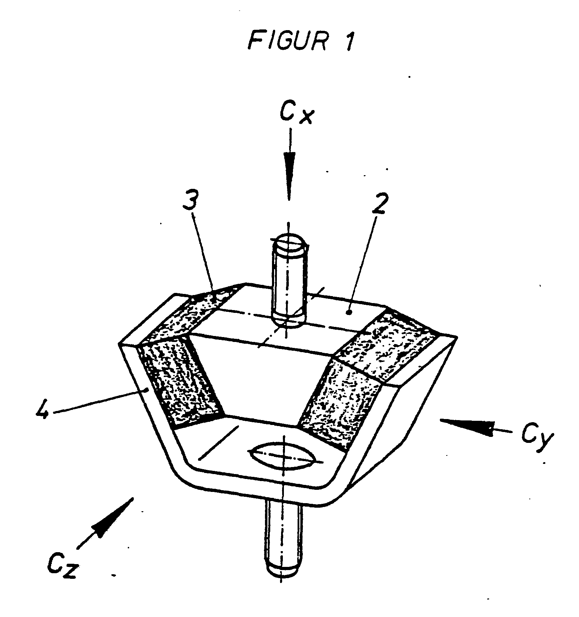

Ein anderes Stützlager ist in der DE—C—32 25 700 beschrieben. Bei bekannten Ausbildungen ist das Federelement aus Gummi oder einem anderen Werkstoff mit vergleichbaren Eigenschaften festhaftend mit dem Innenteil und mit dem als Blechmantel ausgeführten Käfig verbunden, so daß der Blechmantal und das Federelement unmittelbar den Arbeitsraum umschließen, der durch die Trennwand mit der Drosselöffnung von dem Ausgleichsraum getrennt ist. Letzterer ist innerhalb eines Rollbalges (Figur 1) oder innerhalb eines weiteren Federelements (Figuren 7 und 8) angeordnet. Das Federelement ist bei diesem elastischen Stützlager rotationssysmmetrisch ausgebildet. Die Verformung des Federelements unter Belastung führt unmittelbar zur Volumenänderung des Arbeitsraumes. Diese bekannten elastischen Stützlager sind daher nur in beschränktem Umfange mit unterschiedlichen Federraten des Federelements in Hoch-, Längs- und Querrichtung zu konstruieren, so daß sie den allgemeinen Forderungen einer Schwingungsdämpfung und -tilgung nur ungenügend entsprechen. Da das Federelement unmittelbar auf die Flüssigkeit im Arbeitsraum wirkt, bestimmt dies die Anforderungen an die Steifigkeit des Werkstoffes des Federelements, da es die Last und den sich aufbauenden Flüssigkeitsdruck aufnehmen muß.

Die GB—A—2 079 894 zeigt ebenfalls ein Motorlager, welches zwar einen Federkörper aufweist, es fehlt jedoch ein hydraulischer Dämpfer mit einer Arbeitskammer und einer Ausgleichskammer. Hiernach arbeitet ein Kolben in einer Flüssigkeit, so daß das Dämpfungsprinzip bei dieser bekannten Anordnung nicht auf Drosselwirkung beruht.

Der Erfindung liegt ist Aufgabe zugrunde, die Möglichkeiten zur Gestaltung des Federlements mit unterschiedlichen Federraten zu verbessern und dieses Federlement mit einem hydraulischen Dämpfer zu kombinieren, der unabhängig von den statischen Belastungen besser auf die Betriebsschwingungen im Fahrbetrieb abzustimmen ist.

Zur Lösung der gestellten Aufgabe ist erfindungsgemäß eine Ausbildung mit Merkmalen nach dem Kennzeichen des Patentanspruches 1 vorgesehen.

Dadurch können das Federelement und der hydraulische Dämpfer auf ein optimales Betriebsverhalten abgestimmt werden. Wesentlicher Vorteil ist die Aufnahmemöglichkeit der statischen Einfederung infolge des auf dem Lager ruhenden Gewichts allein durch das Federelement, so daß der hydraulische Dämpfer in Anpassung an die dynamischen Betriebsbelastungen entsprechend kleiner als bisher und somit auch kostengünstiger ausgebildet werden kann, wobei eine bessere Einstellung der Drosselorgane in der Trennwand schon vor dem Einbau in ein Fahrzeug oder dergleichen vorgenommen und eine bessere Funktion des Dämpfers durch sensiblere und nicht mehr von der statischen Belastung beaufschlagte Drosseleinrichtungen erreicht werden kann.

Das Federelement kann bei der Gestaltung eines Lagers mit Merkmalen nach der Erfindung unterschiedliche Federraten in allen drei Richtungen X, Y, Z erhalten, so daß eine Anpassung der Federraten, zum Beispiel an Beschleunigungskräfte bei Kurvenfahrt oder an Wegkurven des Federweges vorgenommen werden kann, und zwar zum Beispiel durch partiell unterschiedliche Shorehärten des Werkstoffes des Federelements, durch Ausnehmungen oder durch Einlagen im Werkstoff.

Vorteilhafte Gestaltungsmerkmale der Erfindung werden nachfolgend anhand einiger Ausführungsbeispiele, die auf der Zeichnung dargestellt sind, erläutert. Auf der Zeichnung zeigen

Figur 1 schematisch eine Perspektivdarstellung eines Federelements,

Figur 2 einen vertikalen Schnitt durch ein Ausführungsbeispiel einer Anordnung gemäß der Erfindung und

Figur 3 einen vertikalen Schnitt durch ein den gegenüber abgeändertes Ausführungsbeispiel.

Die Figur 1 veranschaulicht schematisch den Aufbau eines Federelements und die in einem dreidimensionalen Koordinatensystem auf das Federelement einwirkenden Belastungen in der Richtung CX, CY und CZ. Das Federelement besteht aus dem Innenteil 2 mit der Moglichkeit zur Befestigung an dem abzustützenden Bauteil, dem Federelement 3 aus Gummi oder einem Werkstoff mit vergleichbaren Eigenschaften sowie dem Käfig 4 mit der Möglichkeit zur Befestigung an dem stützenden Bauteil. Das Federelement 3 ist mit dem Innenteil 2 aus Metall und dem außenliegenden Käfig 4 ebenfalls aus Metall in bekannter Weise festhaftend verbunden.

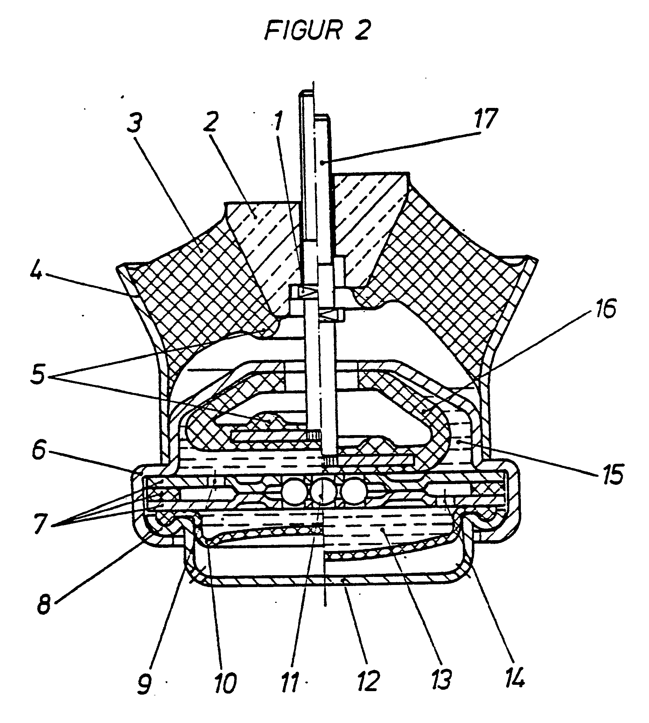

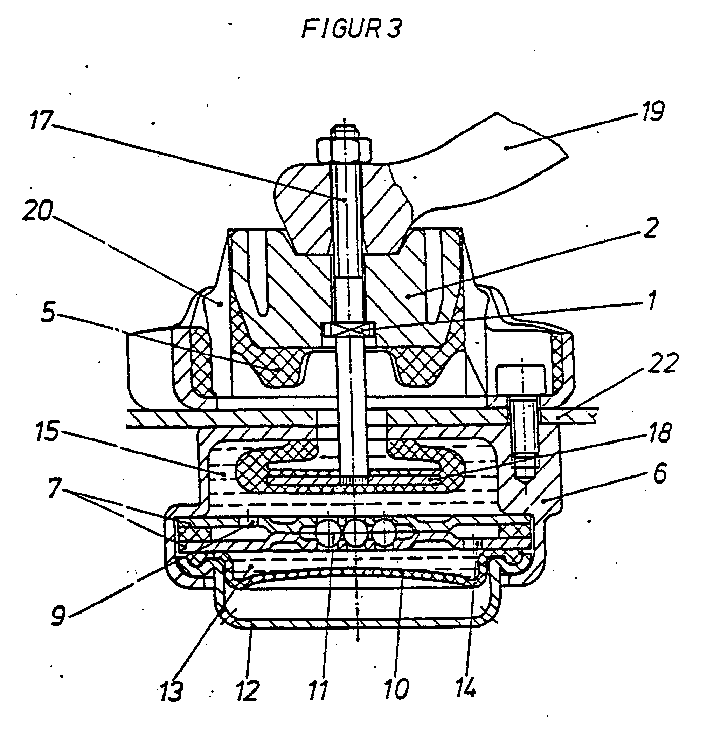

Gemäß der Erfindung und den Ausführungsbeispielen in den Figuren 2 und 3 ist der hydraulische Dämpfer in einem Gehäuse 6 unabhängig von dem Federelement und seinen Halterungen angeordnet. Der Innenraum des Gehäuses 6 ist durch eine Trennwand 7 in einen oberen Arbeitsraum 15 und einen unteren Ausgleichsraum 13 unterteilt. Der Ausgleichsraum 13 ist dabei innerhalb eines Rollbalges 10 angeordnet, der durch eine feste Gehäusekappe 12 gegen mechanisch Beschädigungen geschützt ist und sich innerhalb dieser Kappe 12 frei bewegen kann. Innerhalb des Arbeitsraums 15 ist ein Kolbenglied 18 angeordnet, welches an einer vertikal geführten Kolbenstange 17 befestigt und von einem elastischen Werkstoff umschlossen ist, der in einen Faltenbalg 16 übergeht. Mittels dieses Faltenbalges 16 ist das Kolbenglied 18 gegenüber dem Gehäuse 6 abgedichtet. Die Kolbenstange 17 ist nach oben aus dem Gehäuse 6 herausgeführt und durchgreift höhenverstellbar das Innenteil 2 des Federelements, dessen Gelenkkörper 3 aus elastischem Werkstoff festhaftend mit einem mantelförmigen Käfig 4 verbunden ist. Der mantelförmige Käfig 4 des Federelements ist auf eine Ringschulter des Gehäuses 6 aufgesetzt und mit diesem fest verbunden. Zwischen der Kolbenstange 17 und dem Innenteil 2 ist eine Verdrehsicherung aus einem auf der Kolbenstange 17 angeordneten Bund 1 angeordnet, der in der Draufsicht ein nicht rotationssystemmetrisches Profil aufweist und in eine entsprechend geformte Ausnehmung des Innenteils eingreift. Dadurch muß das Kolbenglied 18 mit der Kolbenstange 17 zusammen mit dem Innenteil 2 die auf das Innenteil 2 eingeleiteten Bewegungen ausführen. Durch die besondere Ausbildung des Balges 16 und durch die gegenüber dem Durchmesser der Kolbenstange 17 größere Durchführung im Gehäuse 6 sind Winkelauslenkungen der Kolbenstange gegenüber der Vertikalen und somit Quer- und Längsbewegungen übertragbar. Der Bund 1 auf der Kolbenstange 17 kann zur Einstellung des elastischen Lagers höhenverstellbar, zum Beispiel auf der Kolbenstange 17 verschraubbar sein. Der Bund 1 begrenzt gleichzeitig die vertikale Bewegung des Innenteils 2 gegenüber der Kolbenstange 17 nach unten, so daß bei entsprechender Einstellung nach der Befestigung der Kolbenstange 17 an dem abzustützenden Bauteil zwischen der Kolbenstange 17 und dem Innenteil 2 eine feste Verbindung hergestellt ist. Diese Verbindung kann in Anpassung an die statische Belastung des Lagers demzufolge in der Höhe eingestellt werden. An der Unterseite des Federkörpers 3 ist ein Anschlag 5 angeformt, der sich bei Abwärtsbewegung des Innenteils 2 auf das Gehäuse 6 aufsetzt und somit eine Begrenzung für diese Bewegung bildet. Ein weiterer Anschlag 5 ist an der Innenseite der das Kolbenglied 18 ummantelnden Schicht ausgebildet, so daß dieser Anschlag die Höhenbewegung des Kolbengliedes 18 nach oben begrenzt.

Die Figur 3 zeigt ein elastischen Lager mit Ausbildungsmerkmalen gemäß der Erfindung, bei dem jedoch die Konturen der Bauteile in Anpassung an gewünschte Eigenschaften des elastischen Lagers geändert sind. Außerdem zeigt die Figur 3 die Verbindung der Kolbenstange 17 mit dem abzustützenden Bauteil 19. Zur Erzielung bestimmter Federraten des Federelementes weist der Federkörper 3 vertikale Durchgangsöffnungen 20 auf, so daß der Federkörper 3 nach Art eines Speichenrades ausgebildet ist.

Es wird in diesem Beispiel außerdem dargestellt, daß der Käfig 4 mit dem Gehäuse 6 des hydraulischen Dämpfers unter Zwischenschaltung einer Platte 22 verschraubt sein kann. Dadurch wird deutlich. daß das Federelement und der hydraulische Dämpfer unabhängig voneinander funktionieren und nicht unbedingt in einer integrierten Bauweise Anwendung finden müssen. Sowohl der Dämpfer als auch das Federelement können voneinander unabhängig angeordnet sein.

Für die Trennwand 7 zwischen dem Arbeitsraum 15 und dem Ausgleichsraum 13 ist in dem Ausführungsbeispielen eine doppelwandige Ausbildung mit einem inneren Ringkanal und möglicht vielen Umlenkungen der Flüssigkeit beim Überströmen von dem einen zum anderen Raum vorgesehen. Um außerdem zu erreichen, daß der Dämpfer bei kleinen Amplituden der auf ihn einwirkenden Schwingungen nur geringfügig wirksam ist, hingegen die größeren Amplituden jedoch stark dämpft, ist die Trennwand außerdem mit Durchgangsöffnungen und darin angeordneten Ventilkugeln 11 ausgestattet. Bei geringen Schwingungsamplituden kann die Flüssigkeit aus dem Arbeitsraum 15 über die freie Bewegung der Ventilkugeln vorbei mit der Flüssigkeit im Ausgleichsraum 13 schwingen, ohne daß die Drosselwirkung des Flachkanals zum Tragen kommt. Das freie Spiel der Kugeln ist jedoch durch Kugeln mit anderer Eintauchtiefe einstellbar. Bei größeren Schwingungsamplituden versperren die Ventilkugeln 11 diese Durchgänge, so daß die Flüssigkeit aus dem Arbeitsraum über die Drosselöffnung 9 zunächst in den Ringraum der doppelwandigen Trennwand und von dort über eine an anderer Stelle angeordnete Austrittsöffnung 14 in den Ausgleichsraum 13 verdrängt wird. Dadurch erfolgt eine Vernichtung der Schwingungsenergie. Diese Wirkung kann dadurch verstärkt werden, daß den Drosselöffnungen besondere Formen, zum Beispiel Nierenformen gegeben werden. Auf diese Weise läßt sich die Wirkung des Dämpfers beeinflussen. Die Erfindungsmerkmale schaffen die Möglichkeit, die Kolbenstange 17 als Sollbruchstelle einer Abreißsicherung auszubilden, so daß zum Beispiel bei Unfällen der Motor des Kraftfahrzeuges nicht herausgerissen wird. Es bricht dann lediglich die Kolbenstange 17, wodurch das Federelement und der Dämpfer, gleichzeitig aber auch der Motor und der Fahrzeugrahmen voneinander getrennt werden.

## Patentansprüche

1. Elastisches Stützlager aus einem hydraulischen Dämpfer, dessen mit Flüssigkeit gefüllter Innenraum durch eine Trennwand (7) mit Überströmdrossel in einen Arbeitsraum (15) und einen Ausgleichsraum (13) unterteilt ist, die beide volumenveränderlich sind, und aus einem zwischen einem starren Innenteil (2) und einem starren äußeren Käfig (4) angeordneten Federelement (3) aus elastischem Werkstoff, welches vom Arbeitsraum des in einem von dem Federlement unabhängigen Gehäuse (6) angeordneten hydraulischen Dämpfers getrennt ist, dadurch gekennzeichnet, daß ein in dem Arbeitsraum (15) beweglicher Kolben (18) mittels eines Balges (16) gegenüber dem Gehäuse (6) abgedichtet ist und eine aus dem Gehäuse (6) mit Spiel herausgeführte Kolbenstange (17) mit dem Innenteil (2) des Federlementes (3) höhenverstellbar verbindbar ist.

2. Elastisches Stützlager nach Anspruch 1, dadurch gekennzeichnet, daß der Käfig (4) des Federelements auf das Gehäuse (6) des Dämpfers ausgesetzt und mit diesem fest verbunden ist.

3. Elastisches Stützlager nach den Ansprüchen 1 und 2, dadurch gekennzeichnet, daß zwichen dem Kolben (18) im Arbeitsraum (15) und dem Innenteil (2) des Federelements eine Verdrehsicherung (1) vorgesehen ist.

4. Elastisches Stützlager nach den Ansprüchen 1 bis 3, dadurch gekennzeichnet, daß die Verdrehsicherung aus einem Bund (1) auf der Kolbenstange (17) mit einem nicht rotationssymmetrischen Profil besteht, der in eine entsprechend gestaltete Ausnehmung des Innenteils (2) des Federelements eingreift.

5. Elastisches Stützlager nach Anspruch 4, dadurch gekennzeichnet, daß die Ausnehmung im Innenteil (2) des Federelements in der Oberseite durch eine Schulter begrenzt ist, die die Relativbewegung der Kolbenstange (7) gegenüber dem Innenteil (2) nach oben begrenzt.

6. Elastisches Stützlager nach einem oder mehreren der Ansprüche 1 bis 5, dadurch gekennzeichnet, daß an der Unterseite des Federelements und an der Oberseite des Kolbens (18) im Arbeitsraum (15) aus elastischem Werkstoff geformte Anschläge (5) vorgesehen sind, die einerseits die Senkbewegung des Innenteils (2) des Federelements gegenüber dem Gehäuse (6) des Dämpfers und andererseits die Hubbewegung des Kolbens (18) gegenüber dem Gehäuse (6) begrenzen.

**Revendications**

1. Support de montage élastique constitué d'un amortisseur hydraulique dont le volume intérieur, empli de liquide, est subdivisé, par une cloison (7) avec volet de trop-plein, en un compartiment de travail (15) et un compartiment de compensation (13), tous deux étant de volume variable, et d'un élément formant ressort (3), en matériau élastique, placé entre une partie intérieure (2) rigide et une cage (4) extérieure, rigide, lequel élément formant ressort est séparé du compatiment de travail de l'amortisseur hydraulique, placé dans un boîtier (6), indépendant de l'élément formant ressort, caractérisé en ce qu'un piston (18), mobile dans le compartiment de travail (15), est rendu étanche, par rapport au boîtier (6) par un soufflet (16), et une tige de piston (17), ressortant du boîtier (6), avec un certain jeu, est reliée, de manière réglable en hauteur, à la partie intérieure (2) de l'élément formant ressort (3).

2. Support de montage élastique selon la revendication 1, caractérisé en ce que la cage (4) de l'élément formant ressort est placée sur le boîtier (6) de l'amortisseur et reliée, de façon fixe à celui-ci.

3. Support de montage élastique selon les revendications 1 et 2, caractérisé en ce qu'on prévoit un blocage en rotation, entre le piston (18), dans le compartiment de travail (15) et la partie intérieure (2) de l'élément formant ressort.

4. Support de montage élastique selon les revendications 1 à 3, caractérisé en ce que le blocage en rotation est constitué par un épaulement (1) sur la tige de piston (17), avec un profil non symétrique en rotation, qui s'engage dans un évidement de forme correspondante, de la partie intérieure (2) de l'élément formant ressort.

5. Support de montage élastique selon la revendication 4, caractérisé en ce que l'évidement de la partie intérieure (2) de l'élément formant ressort, est limité, sur sa face supérieure, par un épaulement qui limite vers le haut, le déplacement relatif de la tige de piston (17) par rapport à la partie intérieure (2).

6. Support de montage élastique selon une ou plusieurs des revendications 1 à 5, caractérisé en ce qu'on prévoit, sur la face inférieure de l'élément formant ressort et sur la face supérieure du piston (18), dans le compartiment de travail (15), des butées (5) réalisées dans un matériau élastique, qui limitent d'une part le mouvement de descente de la partie intérieure (2) de l'élément formant ressort, par rapport au boîtier (6) de l'amortisseur, et d'autre part, le mouvement de montée du piston (18), par rapport au boîtier (6).

**Claims**

1. Elastic support bearing consisting of an hydraulic damper, whose fluid-filled interior is subdivided by a partition wall (7) with an overflow choke into a working chamber (15) and an equalising chamber (13), both of which are variable in volume, and of a resilient element (3) made of elastic material and disposed between a rigid inner portion (2) and a rigid outer cage (4), which resilient element (3) is separated from the working chamber of the hydraulic damper mounted in a housing (6) which is independent of the resilient element, characterised in that a piston (18) movable in the working chamber (15) is sealed from the housing (6) by a bellows (16), and a piston rod (17) guided out of the housing (6) with play may be connected in a height-adjustable manner to the inner portion (2) of the resilient element (3).

2. Elastic support bearing according to claim 1, characterised in that the cage (4) of the resilient element is mounted on the housing (6) of the damper and is rigidly connected thereto.

3. Elastic support bearing according to claims 1 and 2, characterised in that a locking element (1) is provided to prevent rotation between the piston (18) in the working chamber (15) and the inner portion (2) of the resilient element.

4. Elastic support bearing according to claims 1 to 3, characterised in that the locking element consists of a collar (1) on the piston rod (17) with a profile which is not rotationally symmetrical and which engages in a corrspondingly formed recess of the inner portion (2) of the resilient element.

5. Elastic support bearing according to claim 4, characterised in that the recess in the inner portion (2) of the resilient element is defined on the upper side by a shoulder, which limits the upward relative movement of the piston rod (7) relative to the inner portion (2).

6. Elastic support bearing according to one or more of claims 1 to 5, characterised in that on the lower side of the resilient element and on the upper side of the piston (18) in the working chamber (15), stops (5) moulded from elastic material are provided, which on the one hand limit the downward movement of the inner portion (2) of the resilient element relative to the housing (6) of the damper and on the other hand limit the stroke of the piston (18) relative to the housing (6).

FIGUR 1

FIGUR 2

## FIGUR 3